# EUROPEAN PATENT APPLICATION

(11) **EP 0 743 645 A2**
(43) Date of publication of application: **20.11.1996**
(21) Application number: 96303535.7
(22) Date of filing: 17.05.1996
(51) Int. Cl.: G11B 25/06, G11B 15/32

(54) **Reel table transferring mechanism of magnetic recording/reproducing apparatus**

(30) Priority: 18.05.1995 KR 9512460
(71) Applicant: SAMSUNG ELECTRONICS CO., LTD., Suwon-city, Kyungki-do 441-373 (KR)
(72) Inventor: Hong, Min-pyo, Seocho-gu, Seoul (KR)
(74) Representative: Chugg, David John

(57) **Abstract**

A reel table transferring mechanism, which enables tape cassettes of different sizes to be selectively loaded, includes guide rods (140, 270) for supporting two reel tables (130, 170) and a slide member (180) for transferring the two reel tables.

## Description

The present invention relates to a reel table transferring mechanism of a magnetic recording/reproducing apparatus such as VTR**'**s, camcorders or digital-video cassette recorders (D-VCR), and more particularly, to a reel table transferring mechanism of a magnetic recording/reproducing apparatus having a structure in which a cassette having one of two different sizes is selectively loaded.

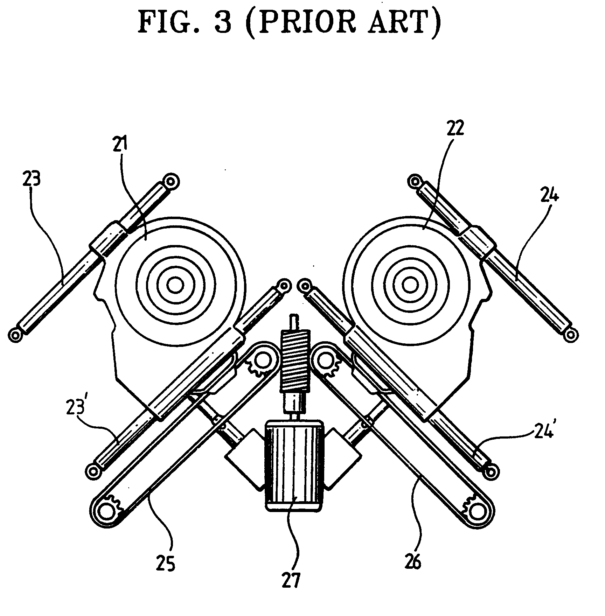

A mechanism has recently been suggested in *Japan Television Associates* Vol. 44, No. 9, p. 1216, in which a pair of reel tables move for selectively loading one of two tape cassettes of different sizes. As shown in Figure 3, reel tables 21 and 22 are supported to be slidable along respective pairs of guide shafts 23, 23' and 24, 24'. Timing belts 25 and 26 driven by a motor 17 enable the reel tables 21 and 22 to move, varying the distance therebetween to enable loading of tape cassettes of different sizes.

In the above-described mechanism in which the reel tables 21 and 22 move linearly, installing the required guide shaft pairs 23, 23' and 24, 24' takes up space on the deck and complicates the apparatus.

With a view to solving or reducing the above problems, it is an aim of preferred embodiments of the present invention to provide a reel table transferring mechanism of a magnetic recording/reproducing apparatus in which a smoother transfer of the reel table can be achieved.

According to a first aspect of the invention, there is provided a reel table transferring mechanism of a magnetic recording/reproducing apparatus including a pair of reel tables for receiving reels of a tape cassette installed on a deck and an adjusting means for adjusting the distance between said reel tables so that tape cassettes of different sizes can be selectively placed on said reel tables, wherein said adjusting means comprises:
a pair of plate members by which reel motors for driving said reel tables are supported;
means for guiding the transfer of said reel tables so that said reel tables get closer to or farther apart from each other;
a slide member disposed between said two reel tables, installed on said deck to slide, being supported by a predetermined support means, and movably coupled with said plate members;
means for coupling said plate members with said slide member; and
means for driving the movement of said slide member.

Preferably, said guiding means comprises a pair of guide rods which are fixedly installed at positions on said deck along the sliding direction of said reel tables, and simultaneously, coupled with each plate member at one side thereof to be capable of sliding.

Supports which contact said deck to be capable of sliding are preferably formed at the side of each plate member so as to support said reel tables together with said guide rods.

Said coupling means preferably comprises: a plurality of guide pins which are formed on said plate member, respectively; and a plurality of guide slots, formed on said slide member, to be coupled with said guide pins of each plate member.

Said plurality of guide slots are preferably formed at a slant on said slide member.

Preferably said driving means comprises: a rack member coupled with the bottom of said slide member; and a driving motor coupled with said rack member.

Preferably, a position determining means for determining the transfer position of said reel tables is provided. Said position determination means preferably includes first and second stoppers formed at predetermined positions on said deck to limit the movement of said slide member.

Preferably, first and second guide holes are formed at positions on said deck corresponding to the movement of said reel tables, respectively, such that each reel motor is disposed under said deck.

Said support means preferably comprises: a third guide slit formed on said deck corresponding to the movement of said slide member; and a plurality of guide supports coupled with said slide member and coupled with said guide slot to allow sliding.

For a better understanding of the invention, and to show how embodiments of the same may be carried into effect, reference will now be made, by way of example, to the accompanying diagrammatic drawings, in which:
Figures 1 and 2 are plan views illustrating a large tape cassette and a small tape cassette, respectively;
Figure 3 is a plan view schematically illustrating a conventional reel table transferring mechanism;
Figure 4 is an exploded perspective view illustrating a reel table transferring mechanism according to an embodiment of the present invention;
Figures 5 and 6 are plan views illustrating the operating positions of the reel table, respectively; and
Figure 7 is a side view schematically illustrating a reel table transferring mechanism according to an embodiment of the present invention.

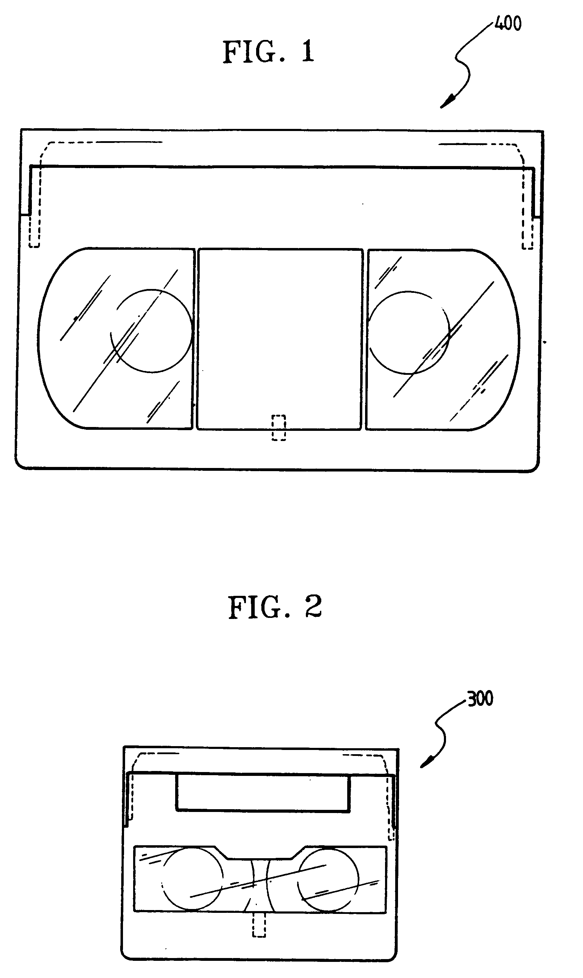

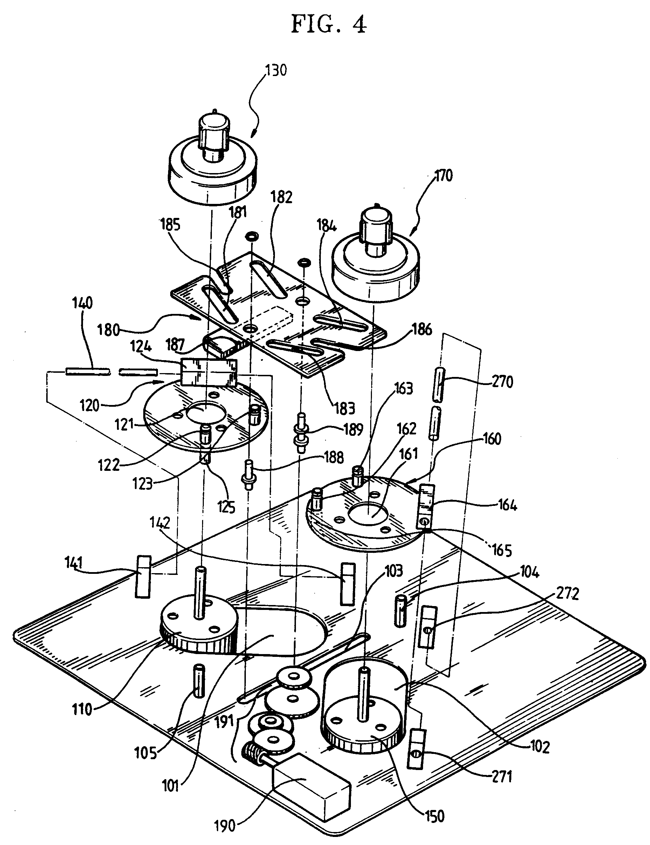

Referring to Figure 4, the characteristic features of an embodiment of the present invention in which an adjusting means for adjusting the distance between the reel tables 130 and 170 for selectively loading one of tape cassettes 300 and 400 shown in Figures 1 and 2, will now be described.

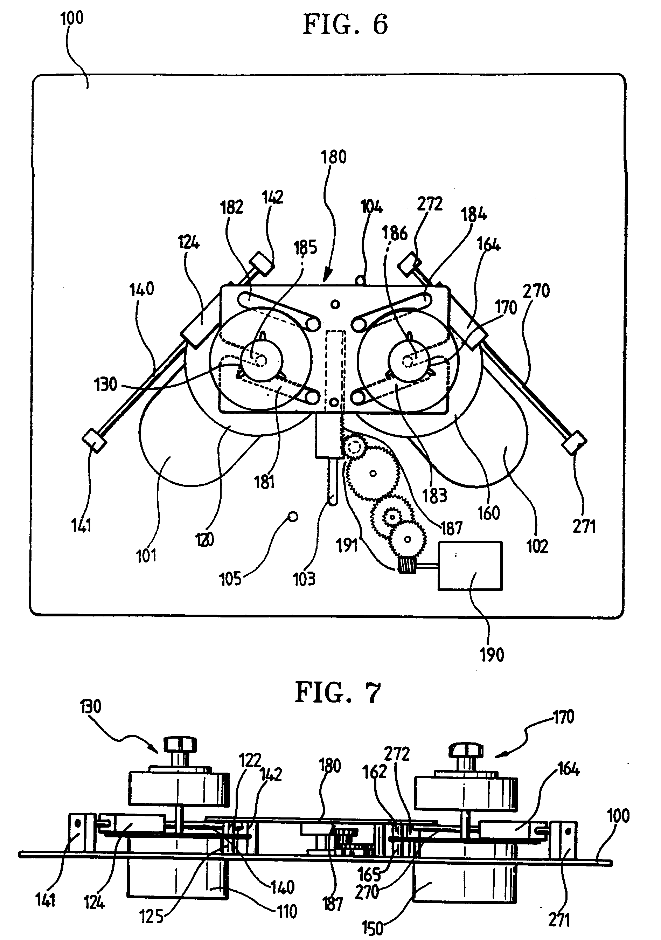

The reel tables 130 and 170 are coupled to shafts of reel motors 110 and 150, respectively. Plate members 120 and 160 are fixed to the reel motors 110 and 150, respectively. Holes 121 and 161 through which the shafts of the reel motors 110 and 150 pass are formed on the plate members 120 and 160, respectively. A guide means for guiding the reel tables 130 and 170 so that the reel tables 130 and 170 can be transferred toward and away from each other are also provided. A slide member 180 is provided between the two reel tables 130 and 170. The slide member 180 supported by a predetermined supporting means is installed to slide on a deck 100. Also, the slide member 180 is coupled to the plate members 120 and 160 so that guide pins 122, 123, 162 and 163 of plate members 120 and 160 slide along guide slots 181, 182, 183 and 184 of the slide member 180. Here, the guide slots 181, 182, 183 and 184 are slanted at a predetermined angle. Coupling slits 185 and 186 for allowing the shafts of the reel motors 110 and 150 to slide therein are formed at the sides of the slide member 180. A driving means is also provided for moving the slide member 180 along a guide slit 103 of the deck 100 between the two reel tables 130 and 170. The slide member 180 is coupled with the guide slit 103 by guide supports 188 and 189 being supported to be capable of sliding. Here, a predetermined clearance separates slide member 180 from the deck 100 as shown in Figure 7.

Here, first and second guide holes 101 and 102 are formed on the deck 100 to facilitate the movement of the reel tables 130 and 170. As shown in Figure 7, the reel motors 110 and 150 for driving the reel tables 130 and 170, respectively, are disposed so that the reel motors 110 and 150 slide partly below the deck 100. Accordingly, the deck mechanism is compact.

The guide means includes guide rods 140 and 270 exterior to and along the sides of the first and second guide holes 101 and 102. These guide rods 140 and 270 are supported by a plurality of supports 141, 142, 271 and 272 which are fixed on the deck 100. The plate members 120 and 160 are slidably coupled with the guide rods 140 and 270 by means of pipe-shaped guide blocks 124 and 164, fixed to one side of the plate members 120 and 160, respectively, through which the guide rods 140 and 270 are inserted.

Supports 125 and 165 are formed at the other side of the plate members 120 and 160, as shown in Figures 4 and 7, which contact the deck 100 to be capable of sliding are formed. Thus, the plate members 120 and 160 are stably supported while maintaining a horizontal state by means of the guide rods 140 and 270 and the supports 125 and 165.

In the meantime, the driving means for moving the slide member 180 has the following structure as shown in Figures 4 through 6. A rack member 187 where a rack gear is formed is attached to the bottom of the slide member 180. The last gear of a gear train 191 installed on the deck 100 engages with the rack member 187, wherein the gear train 191 is driven by a driving motor 190, thus enabling the slide member 180 to slide by the driving force of the driving motor 190.

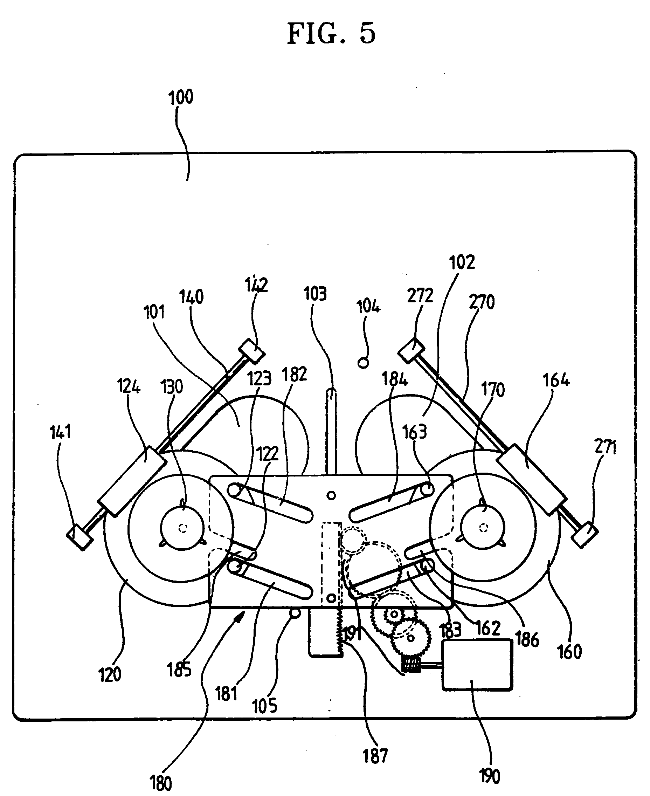

As shown in Figures 5 and 6, a position determining means is provided for determining the operating positions of the reel tables 130 and 170. The position determining means has first and second stoppers 104 and 105 which are formed on the deck 100 at the predetermined positions to limit the movement of the slide member 180.

The reel table transferring mechanism operates as follows.

Figure 5 shows the reel tables 130 and 170 in a position to receive the tape cassette 400 of Figure 1. First, the last gear of the gear train 191 engaged with the rack member 187 rotates counter-clockwise by the driving force of the driving motor 190. The slide member 180 slides until it contacts the stopper 105 as shown in Figure 5. Here, the plurality of guide pins 122, 123, 162 and 163 slide along the guide slots 181, 182, 183 and 184, and simultaneously, the plate members 120 and 160 move along the guide rods 140 and 270, respectively. While moving, the plate member 120 and 160 remain horizontal with the assistance of the supports contacting the deck 100. When the slide member 180 moves down to contact the stopper 105, the shafts of the reel motors 110 and 150 leave the coupling slits 185 and 186.

Consequently, as the slide member 180 moves downward, the distance between the reel tables 130 and 170 becomes wider. Thus, the tape cassette 400 of Figure 1 can be placed on the reel tables 130 and 170.

Figure 6 shows the reel tables 130 and 170 in a position for receiving the smaller tape cassette 300 of Figure 2. First, the last gear of the gear train 191 engaged with the rack member 187 is rotated clockwise by the driving force of the driving motor 190. The slide member 180 moves up as shown in Figure 6. Here, the plurality of guide pins 122, 123, 162 and 163 slide along the guide slots 181, 182, 183 and 184 of the slide member 180. At the same time, the plate members 120 and 160 are transferred along the guide rods 140 and 270, respectively. While moving, the plate members 120 and 160 remain horizontal with the assistance of the supports 125 and 165. When the slide member 180 moves upward, the shafts of the reel motors 110 and 150 are slidingly coupled with the coupling slits 185 and 186.

Accordingly, as the slide member 180 moves up, the distance between the reel tables 130 and 170 becomes narrower. Thus, the tape cassette 300 of Figure 2 can be placed on the reel tables 130 and 170. Also, excessive movement of the slide member 180 is prevented by the first stopper 104. Consequently, the tape cassette 300 can be loaded.

As described above, reel table transferring mechanisms according to embodiments of the present invention have a structure enabling the two reel tables 130 and 170 to be transferred by the movement of one slide member 180, unlike the conventional technology. Therefore, the mechanism is simpler and cost is reduced due to a fewer number of the parts.

The reader**'**s attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A reel table transferring mechanism of a magnetic recording/reproducing apparatus including a pair of reel tables (130, 170) for receiving reels of a tape cassette installed on a deck and an adjusting means for adjusting the distance between said reel tables so that tape cassettes of different sizes can be selectively placed on said reel tables (130, 170), wherein said adjusting means comprises:
a pair of plate members (120, 160) by which reel motors (110, 150) for driving said reel tables (130, 170) are supported;
means for guiding the transfer of said reel tables so that said reel tables get closer to or farther apart from each other;
a slide member (180) disposed between said two reel tables (130, 170), installed on said deck to slide, being supported by a predetermined support means, and movably coupled with said plate members (120, 160);
means for coupling said plate members (120, 160) with said slide member (180); and
means for driving the movement of said slide member.

2. A reel table transferring mechanism of a magnetic recording/reproducing apparatus as claimed in claim 1, wherein said guiding means comprises a pair of guide rods (140, 270) which are fixedly installed at positions on said deck along the sliding direction of said reel tables (130, 170), and simultaneously, coupled with each plate member (120, 160) at one side thereof to be capable of sliding.

3. A reel table transferring mechanism of a magnetic recording/reproducing apparatus as claimed in claim 2, wherein supports (125, 165) which contact said deck to be capable of sliding are formed at the side of each plate member (120, 160) so as to support said reel tables (130, 170) together with said guide rods (140, 270).

4. A reel table transferring mechanism of a magnetic recording/reproducing apparatus as claimed in claim 1, wherein said coupling means comprises:
a plurality of guide pins (122, 123, 162, 163) which are formed on said plate member (120, 160), respectively; and
a plurality of guide slots (181, 184), formed on said slide member (180), to be coupled with said guide pins (122, 123, 162, 163) of each plate member (120, 160).

5. A reel table transferring mechanism of a magnetic recording/reproducing apparatus as claimed in claim 4, wherein said plurality of guide slots (181 - 184) are formed at a slant on said slide member (180).

6. A reel table transferring mechanism of a magnetic recording/reproducing apparatus as claimed in any of the preceding claims, wherein said driving means comprises:
a rack member (187) coupled with the bottom of said slide member (180); and
a driving motor (190) coupled with said rack member (187).

7. A reel table transferring mechanism of a magnetic recording/reproducing apparatus as claimed in any of the preceding claims, further comprising a position determining means for determining the transfer position of said reel tables.

8. A reel table transferring mechanism of a magnetic recording/reproducing apparatus as claimed in claim 7, wherein said position determination means includes first and second stoppers (104, 105) formed at predetermined positions on said deck to limit the movement of said slide member (180).

9. A reel table transferring mechanism of a magnetic recording/reproducing apparatus as claimed in any of the preceding claims, wherein first and second guide holes (101, 102) are formed at positions on said deck corresponding to the movement of said reel tables (130, 170), respectively, such that each reel motor (110, 150) is disposed under said deck.

10. A reel table transferring mechanism of a magnetic recording/reproducing apparatus as claimed in any of the preceding claims, wherein said support means comprises:
a third guide slit (103) formed on said deck corresponding to the movement of said slide member (180); and
a plurality of guide supports (188, 189) coupled with said slide member (180) and coupled with said guide slot (103) to allow sliding.
